# EUROPEAN PATENT APPLICATION

(11) **EP 2 447 144 A1**
(43) Date of publication of application: **02.05.2012**
(21) Application number: 10189295.8
(22) Date of filing: 28.10.2010
(51) Int. Cl.: B62K 23/06, B62K 23/04, B62J 27/00

(54) **Safety device for the brake lever of motorcycles and the like**

(71) Applicant: Calzolari, Emanuele, 16035 Rapallo (GE) (IT); Calzolari, Renato, 16038 Santa Margherita Ligure (GE) (IT)
(72) Inventor: Calzolari, Emanuele, 16035 Rapallo (GE) (IT); Calzolari, Renato, 16038 Santa Margherita Ligure (GE) (IT)
(74) Representative: Modiano, Micaela Nadia

(57) **Abstract**

A safety device (1; 100) for the brake lever (7) of motorcycles and the like, which consists in that it comprises a spacer element (2; 121, 122) which is provided with a hole (3) for fitting onto a handlebar (4) of the motorcycle, the spacer element (2; 121, 122) being provided with fixing means (6) which are adapted to lock the spacer element onto the handlebar (4), the spacer element (2; 121, 122) being adapted to be made integral with the twist grip (5) of the throttle of the motorcycle, so as to come into abutment with the brake lever (7), as a result of a rotation of the throttle twist grip (5) in order to accelerate the motorcycle, in order to prevent the actuation of the brake lever (7), should it be actuated accidentally.

## Description

The present invention relates to a safety device for the brake lever of motorcycles and the like.

More specifically, the invention relates to a safety device for the brake lever which prevents its actuation as a result of accidental impact.

As is known, the throttle of a motorcycle is controlled by rotating the corresponding twist grip and, in the step of opening the throttle command, i.e. the step of rotating the twist grip, such control does not involve the use of the brake lever, which is arranged in front of the twist grip.

It may happen, for example in motorcycle competitions, that, with the throttle in the open position, the brake lever is inadvertently pressed. This implies serious consequences for the rider, above all because of the element of surprise and the violent and sudden reactions of the motorcycle.

This condition can often arise on a straight stretch, when the rider has the throttle fully open, i.e. the throttle twist grip is completely rotated. In this condition, if the brake lever is knocked owing to contact with a motor vehicle in front, the sudden braking will cause a serious accident for the rider.

Currently no technical solutions are available that solve the problem of involuntary actuation of the brake lever in the event of impact, which can produce elements of danger for the rider.

Indeed, as noted, the feared locking of the front wheel, caused by pressure on the front brake lever by external agents, i.e. pressure that is not intended by the rider, in the majority of cases results in the rider's falling.

The principal aim of the present invention is to provide a safety device for the brake lever of motorcycles and the like, which makes it possible to prevent unwanted actuations of the brake lever.

Within this aim, an object of the present invention is to provide a safety device for the brake lever of motorcycles and the like, which can be installed on all existing motorcycles, without having to alter the configuration of the twist grip of the throttle or of the brake lever.

Another object of the present invention is to provide a safety device for the brake lever of motorcycles and the like that is highly reliable, easy to implement and low cost.

This aim, as well as these and other objects which will become better apparent hereinafter, are achieved by a safety device for the brake lever of motorcycles and the like, characterized in that it comprises a spacer element which is provided with a hole for fitting onto one of the handlebars of the motorcycle, said spacer element being provided with fixing means which are adapted to lock said spacer element onto the handlebar, said spacer element being adapted to be made integral with the twist grip of the throttle of the motorcycle, so as to come into abutment with said brake lever, as a result of a rotation of said twist grip of the throttle in order to accelerate said motorcycle, in order to therefore prevent the actuation of said brake lever, should it be actuated accidentally.

Further characteristics and advantages of the invention will become better apparent from the description of preferred, but not exclusive, embodiments of the device according to the present invention, illustrated by way of non-limiting example in the accompanying drawings wherein:

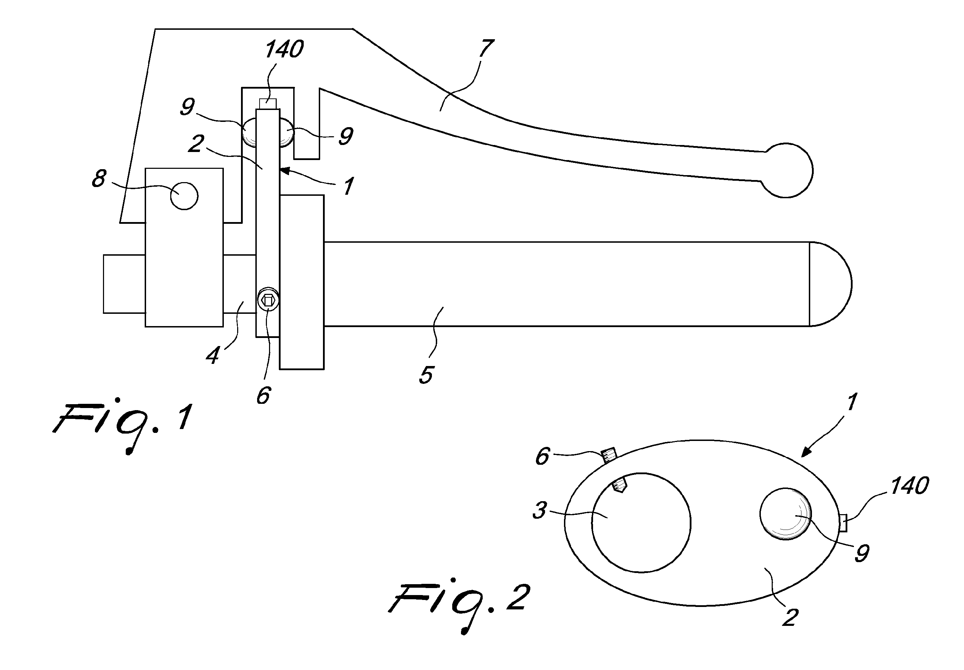

Figure 1 is a plan view from above of the device according to the invention, applied to a throttle twist grip with associated brake lever;
Figure 2 shows the device according to the invention in a first embodiment;
Figure 3 is a plan view from above of a second embodiment of the device according to the invention, applied to a throttle twist grip with associated brake lever;
Figures 4a-4c show the device according to the invention in different operative steps;
Figure 5 is a partly sectional view of a detail of the device according to the invention, applied to a throttle twist grip;
Figure 6 is a perspective view of the device according to the invention, in its second embodiment, applied to a throttle twist grip.

With reference to the figures, the device according to the invention, generally indicated by the reference numeral 1, comprises a spacer element 2 which is provided with at least a hole 3 for fitting onto a handlebar 4, specifically onto the handlebar that has the throttle twist grip 5.

Locking the spacer element 2 on the handlebar 4 is achieved by means of locking means, for example a threaded grub screw 6.

The spacer element 2 is thus made integral with the handlebar 4 and integral with the rotation of the throttle twist grip 5 so that it can be brought, in the condition of the throttle being fully open, or in any case in a determined open position of the throttle twist grip 5, in abutment against the brake lever, in order to prevent the motorcycle brake lever 7, which is also rotatably connected to the handlebar 4 by means of pivoting at a pin 8, from being actuated accidentally.

Substantially, therefore, the spacer element 2 acts to prevent the closure stroke of the brake lever 7.

Conveniently, the spacer element 2 is provided with lateral bearings or anti-friction elements 9, which are arranged at the end of the spacer element 2 that is opposite to the end at which the spacer element 2 is fitted over the handlebar 4.

The position of the spacer element 2 on the handlebar 4 can be adjusted so as to produce the intervention of the spacer element 2 at a determined degree of aperture of the throttle twist grip 5.

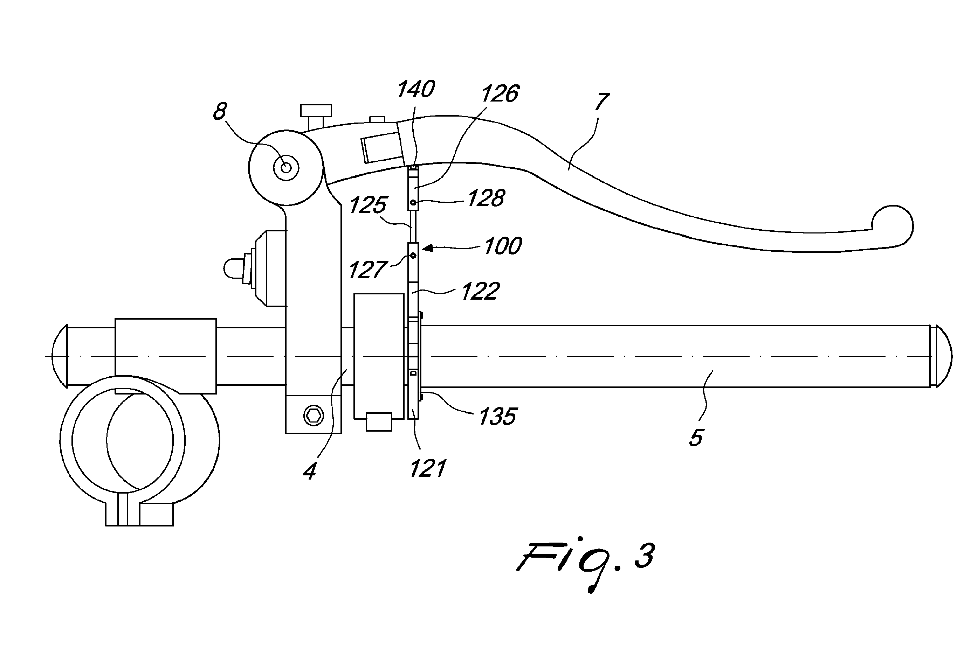

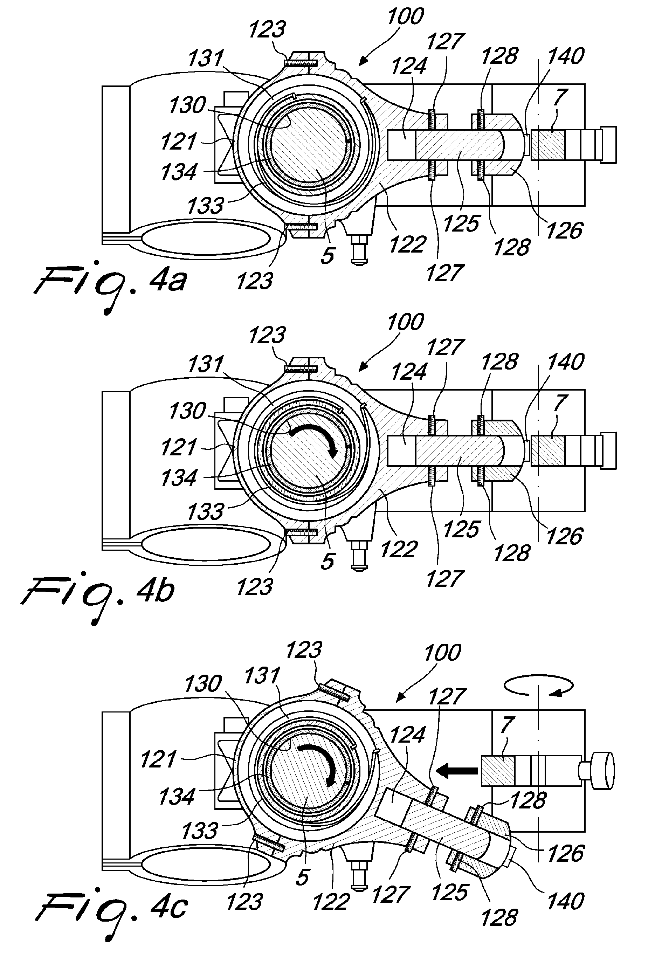

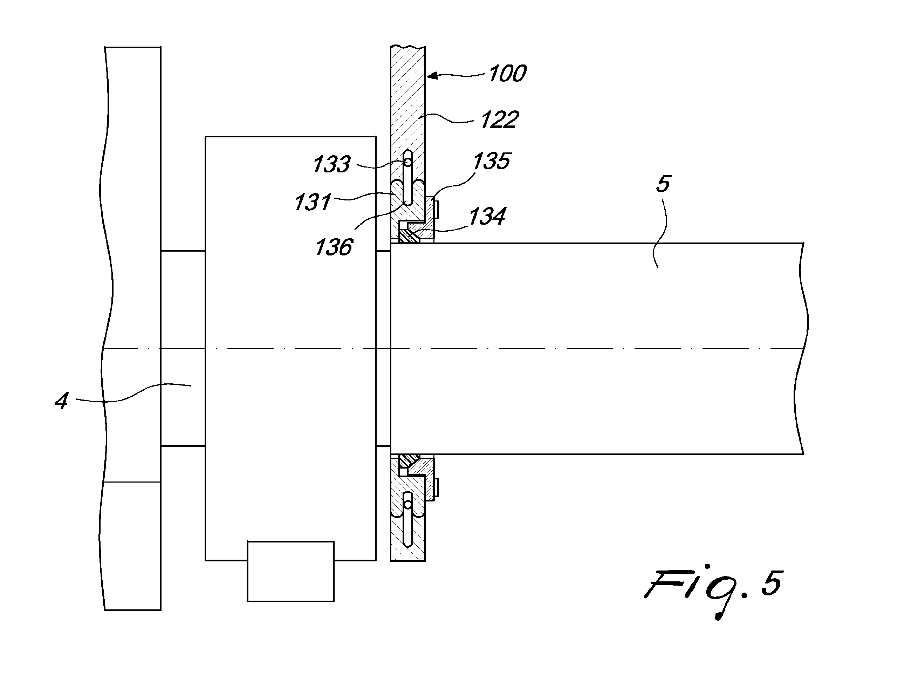

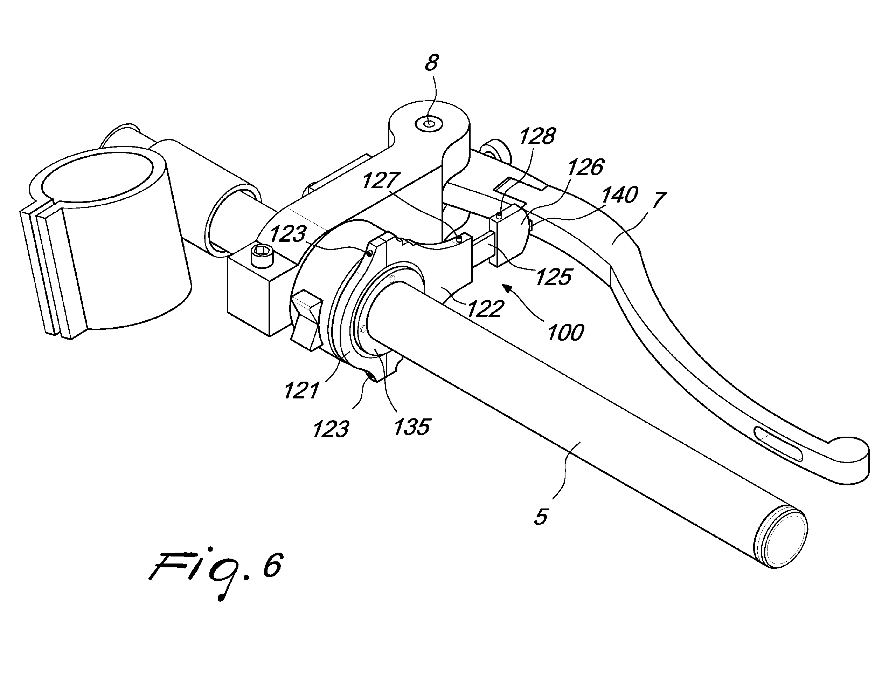

Figures 3-6 show a second embodiment of the device according to the invention, in which the device, generally indicated by the reference number 100, comprises a spacer element that is again adapted to be mounted on the handlebar 4, which is made in two parts 121 and 122 which are adapted to be coupled to each other by means of coupling means 123, such as for example hex head screws, so as to couple the two parts 121 and 122 about the handlebar 4.

Conveniently, the spacer element 121, 122 is adjustable in its size, since it is provided with a recess 124 that is adapted to adjustably accommodate a pin 125 that has, at the opposite end from the end which is inserted into the recess 124, a portion 126 that can be spaced from the portion 122. Fixing the pin 125 inside the recess 124 can be achieved by means of for example grub screws 127, just as fixing the end portion 126 on the pin can be achieved by means of grub screws 128. In this way, the spacer element 121, 122 can be adapted to any type of motorcycle, irrespective of the distance between the handlebar 4 and the brake lever 7.

This is of particular importance because in this way it is possible to make a single spacer element, which can be adapted to all types of motorcycle, so saving on production and storage costs.

Moreover, in order to ensure that the spacer element 121, 122 can come into contact with the brake lever 7 and at the same time maintain the rider's ability to perform the action of deceleration by rotating the throttle twist grip 5 in the deceleration direction, the spacer element 121, 122 is provided with a ring 131 which can rotate inside the body of the spacer element 122, and with elastic means 133, which are accommodated in a circumferential groove 136 of the ring 131 and are connected, at one end, to the body of the spacer element 121, 122 and, at the other end, to the ring 131. The elastic means 133. are conveniently constituted for example by a harmonic steel wire which is shaped so as to follow the profile of the ring 131.

The gasket means 134 are provided inside the ring 131, so as to provide a sealing element between the ring 131 and the handlebar 4 which is accommodated in a hole 130 of the spacer element 121, 122.

The gasket means 134 are conveniently made for example from a ring of Teflon which has a conical surface that is designed to be faced toward the end part of the handlebar, and against which abuts a locking ring 135 which has a surface that is complementary to that of the Teflon ring 134 and which is adapted to keep the ring 134 in place.

With the configuration described above, with the throttle twist grip 5 fully open, the spacer element 122 can engage with the brake lever 7 so as to prevent an accidental braking, but the rider can still perform a deceleration, i.e. can bring the throttle twist grip 5 into the closure condition, thus causing a rotation of the elastic means 133, thereby bringing the two ends of the elastic means to approach each other.

The rotation of the throttle twist grip 5 is therefore not restricted by the position of the body 121 of the spacer element which can remain engaged with the brake lever 7 while at the same time allowing deceleration, i.e. a rotation of the throttle twist grip 5.

When the brake lever 7 is no longer actuated as a result of the accidental contact, the spacer element can at this point be disengaged from the brake lever 7 and then follow the rotation of the throttle twist grip 5 in deceleration.

Therefore, the presence of the ring 131 makes it possible to decouple the rotation of the throttle twist grip 5 from the position of the spacer element 121, 122 when such spacer element is engaged against the brake lever 7 and could not, therefore, be brought back to the position of disengagement, unless the brake lever 7 ceases to be actuated in an unwanted fashion.

Moreover, the device according to the invention can comprise sensor means which are connected to the end of the spacer element 2, 121, 122 which is adapted to come into contact with the brake lever 7. The sensor means 140 are adapted to assess the pressure which acts on the brake lever and send a signal to the motorcycle electronic control unit in order to for example "cut the power" to the engine, or to take other corrective actions, in order to ensure the rider's safety.

In practice it has been observed that the device according to the present invention fully achieves the intended aim and objects, in that it enables the prevention of accidental unwanted brakings when the throttle twist grip is in the open position, while being able to modulate the intervention of the spacer element to a certain degree of openness of the throttle twist grip.

The invention, thus conceived, is susceptible of numerous modifications and variations, all of which are within the scope of the appended claims. Moreover, all the details may be substituted by other, technically equivalent elements.

In practice the materials employed, as well as the dimensions and the contingent shapes, may be any according to requirements and to the state of the art.

Where the technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A safety device (1; 100) for the brake lever (7) of motorcycles and the like, which consists in that it comprises a spacer element (2; 121, 122) which is provided with a hole (3) for fitting onto a handlebar (4) of the motorcycle, said spacer element (2; 121, 122) being provided with fixing means (6) which are adapted to lock said spacer element onto the handlebar (4), said spacer element (2; 121; 122) being adapted to be made integral with the twist grip (5) of the throttle of the motorcycle, so as to come into abutment with said brake lever (7), as a result of a rotation of said throttle twist grip (5) in order to accelerate said motorcycle, in order to therefore prevent the actuation of said brake lever (7), should it be actuated accidentally.

2. The device according to claim 1, **characterized in that** it comprises anti-friction means (9) which are arranged on the opposing faces of said spacer element, at the end opposite to the end of engagement with said handlebar (4).

3. The device according to claim 1, **characterized in that** said spacer element (121, 122) is of adjustable length.

4. The device according to one or more of the preceding claims, **characterized in that** said spacer element (121, 122) is provided with a recess (124) that is adapted to accommodate a pin (125) that has, at the opposite end from the end which is inserted into said recess (124), a portion (126) of said spacer element, so as to adjust the length of said spacer element according to the length of said pin (125).

5. The device according to one or more of the preceding claims, **characterized in that** it comprises, inside said hole (130) which is adapted to allow the insertion of the handlebar (4), a ring (131) which is adapted to release the rotation of said spacer element (121, 122) from the rotation of the throttle twist grip (5) in deceleration.

6. The device according to claim 5, **characterized in that** said ring (131) is coupled to said spacer element (121, 122) by elastic means (133) which are adapted to allow a rotation of said ring (131) with respect to said spacer element (121, 122) only as a result of the rotation in deceleration of said throttle twist grip (5), with said spacer element (121, 122) remaining engaged with said brake lever (7).

7. The device according to one or more of the preceding claims, **characterized in that** it comprises gasket means (134) which are adapted to be interposed between said ring (131) and said handlebar (4).

8. The device according to one or more of the preceding claims, **characterized in that** said elastic means (133) comprise a harmonic steel wire which is adapted to be accommodated inside a circumferential groove (136) of said ring (131).

9. The device according to one or more of the preceding claims, **characterized in that** said spacer element (121, 122) is made in two portions which are adapted to be coupled around said ring (131), which in its turn is made integral with said handlebar (4) which supports the throttle twist grip (5).

10. The device according to one or more of the preceding claims, **characterized in that** it comprises sensor means (140) which are connected to the end of said spacer element (2; 121, 122) which is adapted to come into contact with the brake lever (7), said sensor means (140) being adapted to assess the pressure which acts on the brake lever and to send a signal to the electronic control unit of said motorcycle.

11. Handlebar (4) for motorcycles and the like, comprising a throttle twist grip (5) and a brake lever (7), **characterized in that** it comprises a device (1; 100) according to one or more of the preceding claims.
